# EUROPÄISCHE PATENTANMELDUNG

(11) **EP 2 442 395 A1**
(43) Veröffentlichungstag der Anmeldung: **18.04.2012**
(21) Anmeldenummer: 10187309.9
(22) Anmeldetag: 12.10.2010
(51) Int. Cl.: H01M 8/18, G05B 19/042, G05B 19/05

(54) **Feldgerät zur Prozessinstrumentierung**

(71) Anmelder: SIEMENS AKTIENGESELLSCHAFT, 80333 München (DE)
(72) Erfinder: Balduf, Jochen, 76707, Hambrücken (DE); Scheibner, Dirk, 90473, Nürnberg (DE)

(57) **Zusammenfassung**

Die Erfindung betrifft ein Feldgerät zur Prozessinstrumentierung, welches für einen Einsatz in einem explosionsgefährdeten Bereich (1) geeignet ist, wobei das Feldgerät (2, 3, 4) Mittel zur Erzeugung einer zu seinem Betrieb erforderlichen elektrischen Energie aufweist und wobei das Feldgerät (2, 3, 4) mit Anschlüssen zur Zuführung von Hilfsenergie über Versorgungsleitungen (11a, 11b, 12a, 12b) versehen ist. Dadurch, dass die Mittel zur Erzeugung der elektrischen Energie als Reaktionszellen einer Durchflussbatterie und die Anschlüsse zum Anschluss an Zuführ- und Rückführleitungen (11a, 11b, 12a, 12b) zur Zu- und Rückführung von positiven und negativen Elektrolyten ausgebildet sind, wird ermöglicht, die Hilfsenergie in eine für den Betrieb des Feldgerätes erforderliche elektrische Energie effizient umzuwandeln.

## Beschreibung

Die Erfindung betrifft ein Feldgerät zur Prozessinstrumentierung, welches für einen Einsatz in einem explosionsgefährdeten Bereich geeignet ist, wobei das Feldgerät Mittel zur Erzeugung einer zu seinem Betrieb erforderlichen elektrischen Energie aufweist und wobei das Feldgerät mit Anschlüssen zur Zuführung von Hilfsenergie über Versorgungsleitungen versehen ist. Darüber hinaus betrifft die Erfindung eine Anordnung mit einem derartigen in einem explosionsgefährdeten Bereich angeordneten Feldgerät.

In prozesstechnischen Anlagen werden zur Steuerung von Prozessen vielfältige Feldgeräte (Sensoren, Aktoren) für die Prozessinstrumentierung eingesetzt. Sensoren (Messumformer) dienen zur Erfassung von Prozessvariablen, wie beispielsweise Temperatur, Druck, Durchflussmenge, Füllstand, Dichte oder Gaskonzentration eines Mediums. Durch Stellglieder kann der Prozessablauf in Abhängigkeit von erfassten Prozessvariablen beispielsweise entsprechend einer von einer Leitstation vorgegebenen Strategie oder gesteuert durch ein Automatisierungsgerät, z. B. eine speicherprogrammierbare Steuerung, beeinflusst werden. Als Beispiele für Stellglieder seien ein Regelventil, eine Heizung oder eine Pumpe genannt. Damit eine Leitstation oder ein Automatisierungsgerät mit der Prozessperipherie, d. h. mit den Messumformern oder den Stellgliedern oder weiteren prozessnahe angeordneten Geräten, kommunizieren können, sind diese über ein drahtgebundenes oder ein drahtloses Kommunikationsnetzwerk miteinander verbunden. Über dieses Netzwerk nehmen Leitstation oder Automatisierungsgerät beispielsweise Daten aus den Messumformern auf und geben Steuerinformationen an die Stellglieder aus.

Ein Feldgerät gemäß dem Oberbegriff des Anspruchs 1 ist aus der WO 2008/098583 bekannt. Ein Generator des Feldgerätes erzeugt die für den Betrieb des Feldgerätes erforderliche elektrische Energie mittels Druckluft, die auf dem Gebiet der Prozessinstrumentierung zwar weit verbreitet ist und gewöhnlich in prozesstechnischen Anlagen in ausreichendem Maße zur Verfügung steht; nachteilig ist allerdings, dass die pneumatische Energie nicht optimal in elektrische Energie umgewandelt werden kann.

Der Erfindung liegt daher die Aufgabe zugrunde, ein Feldgerät der eingangs genannten Art zu schaffen, welches die Hilfsenergie in eine für den Betrieb des Feldgerätes erforderliche elektrische Energie effizienter umwandelt. Darüber hinaus ist eine Anordnung mit einem derartigen Feldgerät anzugeben.

Diese Aufgabe wird im Hinblick auf das Feldgerät durch die im kennzeichnenden Teil des Anspruchs 1 angegebenen Maßnahmen, bezüglich der Anordnung mit den im Anspruch 2 angegebenen Maßnahmen gelöst.

Die Erfindung geht von der Idee aus, eine Energie zu nutzen, mittels der ohne wesentliche Verluste elektrische Energie für ein Feldgerät erzeugt werden kann, das für einen Einsatz im explosionsgefährdeten Bereich geeignet ist. Eine derartige Energie ist beispielsweise eine in flüssigen Elektrolyten gespeicherte chemische Energie, welche elektrochemische Reaktoren in Form von Reaktionszellen einer Durchflussbatterie in elektrische Energie umwandeln. Die Reaktionszellen können seriell und/oder parallel angeordnet werden, wodurch die bzw. der verfügbare Spannung und Strom definiert wird, wobei ferner die Leistung durch die Größe und Anzahl der elektrochemischen Zellen vorgegeben wird. Derartige Durchflussbatterien in Form von Vanadium-Redox-Durchfluss-Batterien bzw. Durchflusssystemen sind z. B. aus Dokument "FB10/100 Technische Beschreibung, Cellstrom", Februar 2009 bekannt.

In einer Ausgestaltung der Erfindung sind Mittel vorgesehen, die der Ladeeinheit überschüssige Energie eines technischen Prozesses zuführen. Diese Energie ist zusätzlich zur Erzeugung der Elektrolyten vorgesehen und wird in den Tanks gespeichert.

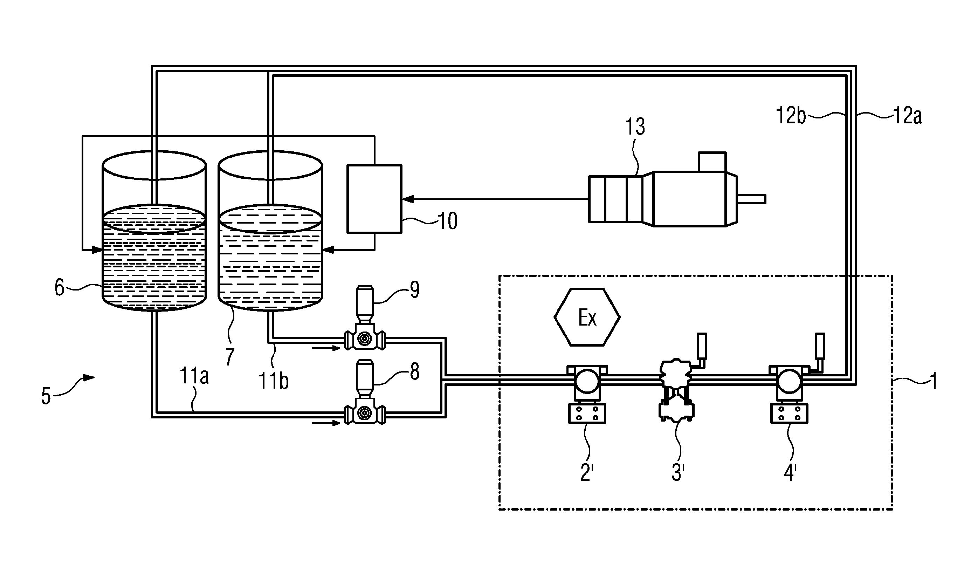

Die Erfindung wird nachfolgend anhand eines Ausführungsbeispiels unter Bezugnahme auf die einzige Figur der Zeichnung näher erläutert. Die Figur der Zeichnung zeigt in einer vereinfachten Darstellung eine Anordnung mit mehreren Feldgeräten.

In einem explosionsgefährdeten Bereich 1 sind mehrere für einen Einsatz in diesem Bereich 1 ausgestaltete Feldgeräte 2, 3, 4 angeordnet, die über geeignete drahtlose oder drahtgebundene Kommunikationsverbindungen mit einem hier nicht dargestellten Automatisierungsgerät oder einer so genannten dezentralen Peripherie verbunden sind. Das Automatisierungsgerät, z. B. eine speicherprogrammierbare Steuerung, sowie das dezentrale Peripheriegerät ist gewöhnlich mit über einen hier nicht dargestellten Rückwandbus verbundenen Modulen bzw. Baugruppen versehen, z. B. Baugruppen in Form von CPU-, Regler- und/oder Ein-/Ausgabe- und/oder sonstigen Funktions-Baugruppen. Die Funktions- und Wirkungsweise der Geräte und deren Zusammenwirken zur Lösung einer Automatisierungsaufgabe bzw. zur Steuerung eines technischen Prozesses oder einer technischen Anlage sind für die Erfindung ohne Bedeutung und brauchen daher nicht näher erläutert zu werden.

Um die Feldgeräte 2, 3, 4 mit Energie zu versorgen, sind in einem nicht explosionsgefährdeten Bereich 5 ein erster und ein zweiter Tank 6, 7 zur Speicherung einer Hilfsenergie in Form von Elektrolyten sowie ferner eine erste und eine zweite Elektrolytpumpe 8, 9 und eine Ladeeinheit 10 angeordnet, wobei die Tanks 6, 7, die Elektrolytpumpen 8, 9 und die Feldgeräte 2, 3, 4 über geeignete Elektrolytleitungen verbunden sind, die Zuführleitungen 11a, 11b und Rückführleitungen 12a, 12b umfassen. Im vorliegenden Ausführungsbeispiel ist der erste Tank 6 zur Speicherung von positiven und der zweite Tank 7 zur Speicherung von negativen Elektrolyten vorgesehen, welche die Ladeeinheit 10 erzeugt und die den Reaktionszellen von Durchflussbatterien der Feldgeräte 2, 3, 4 zugeführt werden. Dazu erzeugt einerseits die Elektrolytpumpe 8 einen Durchfluss der positiven Elektrolyten von dem ersten Tank 6 über die Zuführleitung 11a, die den positiven Elektrolyten zugeordneten Reaktionszellen und über die Rückführleitung 12a wieder zurück in den ersten Tank 6; andererseits erzeugt die Elektrolytpumpe 9 einen Durchfluss der negativen Elektrolyten von dem zweiten Tank 7 über die Zuführleitung 11b, die den negativen Elektrolyten zugeordneten Reaktionszellen und über die Rückführleitung 12b wieder zurück in den zweiten Tank 7. Während des Durchflusses der positiven und negativen Elektrolyten durch die Reaktionszellen der Durchflussbatterien der Feldgeräte 2, 3, 4 erzeugen die Reaktionszellen durch Umwandlung der in den Elektrolyten gespeicherten chemischen Energie eine für den Betrieb der Feldgeräte 2, 3, 4 erforderliche elektrische Energie.

Im Unterschied zu einer drahtgebundenen Energieübertragung werden im Hinblick auf den explosionsgefährdeten Bereich 1 keine komplexen und kostenintensiven elektrischen Sicherungsmaßnahmen benötigt, die eine Funkenbildung bei einer Störung bzw. Beschädigung der Übertragungsleitung unterbinden. Darüber hinaus wird im Gegensatz zu Feldgeräten, welche pneumatische Energie in elektrische Energie umwandeln, durch die Umwandlung der chemischen Energie in elektrische ein höherer Wirkungsgrad erzielt. Um aus einem zu steuernden technischen Prozess nicht verbrauchte Energie, z. B. in Form von Wärmeenergie, zurückzugewinnen, ist vorgesehen, diese der Ladeeinheit 10 zur Erzeugung von positiven und negativen Elektrolyten zuzuführen, was in der Zeichnung durch einen mit der Ladeeinheit 10 verbundenen Verbraucher 13 angedeutet ist. Dadurch wird ermöglicht, die durch den Prozess nicht sofort verbrauchte Energie zu speichern und erst nach Bedarf zu nutzen.

## Patentansprüche

1. Feldgerät zur Prozessinstrumentierung, welches für einen Einsatz in einem explosionsgefährdeten Bereich (1) geeignet ist, wobei das Feldgerät (2, 3, 4) Mittel zur Erzeugung einer zu seinem Betrieb erforderlichen elektrischen Energie aufweist und wobei das Feldgerät (2, 3, 4) mit Anschlüssen zur Zuführung von Hilfsenergie über Versorgungsleitungen (11a, 11b, 12a, 12b) versehen ist, **dadurch gekennzeichnet, dass** die Mittel zur Erzeugung der elektrischen Energie als Reaktionszellen einer Durchflussbatterie und die Anschlüsse zum Anschluss an Zuführ- und Rückführleitungen (11a, 11b, 12a, 12b) zur Zu- und Rückführung von positiven und negativen Elektrolyten ausgebildet sind.

2. Anordnung mit mindestens einem in einem explosionsgefährdeten Bereich (1) angeordneten Feldgerät (2, 3, 4) nach Anspruch 1, wobei in einem nicht explosionsgefährdeten Bereich (5) angeordnet sind:
- eine Ladeeinheit (10) zur Erzeugung der positiven und negativen Elektrolyten,
- ein Tank (6) zur Speicherung der positiven und ein weiterer Tank (7) zur Speicherung der negativen Elektrolyten sowie
- eine erste und eine zweite Elektrolytpumpe (8, 9) zum Erzeugen eines Durchflusses des jeweiligen Elektrolyts vom jeweiligen Tank (6, 7) über die jeweilige Zuführleitung (11a, 11b) durch die Reaktionszellen und wieder zurück über die jeweilige Rückführleitung (12a, 12b) in den jeweiligen Tank (6, 7).

3. Anordnung nach Anspruch 2, **dadurch gekennzeichnet, dass** Mittel vorgesehen sind, die der Ladeeinheit (10) überschüssige Energie eines technischen Prozesses zuführen.
